# EUROPÄISCHE PATENTANMELDUNG

(11) **EP 4 748 636 A1**
(43) Veröffentlichungstag der Anmeldung: **27.05.2026**
(21) Anmeldenummer: 25202649.7
(22) Anmeldetag: 17.09.2025
(51) Int. Cl.: B60N 2/24, B60R 22/22, B60R 22/24

(54) **GURTGESTELL FÜR EINEN FAHRZEUGSITZ**

(30) Priorität: 22.11.2024 DE 102024134464
(71) Anmelder: Aguti Produktentwicklung & Design GmbH, 88085 Langenargen (DE)
(72) Erfinder: Rogg, Christian, 88142 Wasserburg (DE)
(74) Vertreter: RavensPAT Patentanwälte Partnerschaft mbB

(57) **Zusammenfassung**

Gurtgestell für einen Fahrzeugsitz zur Anordnung in einem Fahrzeug, wobei das Gurtgestell eine Vertikalstütze aufweist, wobei am Gurtgestell eine Komponente eines Gurtrückhaltesystems angeordnet ist, wobei ein Rückhalteorgan mit einem ersten Ende des Rückhalteorgans an der Vertikalstütze angeordnet ist, wobei das Rückhalteorgan sich ausgehend von der Vertikalstütze entgegen der Sitzrichtung weg von der Vertikalstütze erstreckt, wobei das Rückhalteorgan mit einem zweiten Ende an einem Fahrzeugdach und/oder einer Fahrzeugsäule des Fahrzeugs anordenbar ausgebildet ist.

## Beschreibung

### Stand der Technik

Vorrichtungen zur Anordnung eines Personenrückhaltesystems in einem Verkehrsmittel sind bekannt, beispielsweise zur Anbringung einer Sicherheitsgurtanordnung zur Personensicherung und von Komponenten eines dazugehörigen Fahrzeugsitzes im Verkehrsmittel. Solche Vorrichtungen werden auch als Gurtgestelle bezeichnet.

In Verkehrsmitteln, wie Fahrzeugen, beispielsweise Personenkraftwagen, Kleinbussen, Wohnmobilen oder Camping-Mobilen werden solche Vorrichtungen als eine Baueinheit für einen nach der Herstellung des Fahrzeugs nachträglichen Einbau im Fahrzeuginneren bereitgestellt. Die Vorrichtung mit dem daran vorhandenen Personenrückhaltesystem muss für im Fahrzeug auftretende maximale Belastungssituationen ausgelegt sein, die insbesondere im Zusammenhang mit Unfallszenarien im Straßenverkehr auftreten können.

Bei der Auslegung der Vorrichtung sind insbesondere Sicherheits- bzw. Stabilitätskriterien zu erfüllen, welche zum Beispiel für eine Zulassung der Vorrichtung bzw. des Fahrzeugs erforderlich sind. Die kostengünstige und wirtschaftlich vorteilhafte Ausbildung bzw. Herstellung der Vorrichtung stellt dabei eine besondere Herausforderung dar.

Eine andere Herausforderung an die Vorrichtung ist die Befestigung der Vorrichtung am Fahrzeug. So ist eine Einbauposition, z.B. die um die Vorrichtung bzw. um den Fahrzeugsitz ggf. vorhandenden weiteren Fahrzeugmöbel, als auch die technische bzw. bauliche Ausgestaltung des Fahrzeugs zu berücksichtigen.

### Aufgabe und Vorteile der Erfindung

Aufgabe der vorliegenden Erfindung ist es, eine verbessertes Gurtgestell der einleitend beschriebenen Art bereitzustellen. Beispielsweise soll ein verbessertes Gurtgestell bereitgestellt werden, bei welchem technische und wirtschaftliche Verbesserungen unter Beibehaltung von Stabilitäts- und Sicherheitskriterien vorteilhaft erfüllt werden.

Diese Aufgabe wird durch die unabhängigen Ansprüche gelöst.

Die abhängigen Ansprüche betreffen vorteilhafte und zweckmäßige Weiterbildungen der Erfindung.

Die Erfindung geht von einem Gurtgestell für einen Fahrzeugsitz zur Anordnung in einem Fahrzeug aus, wobei das Gurtgestell eine Vertikalstütze aufweist, wobei am Gurtgestell eine Komponente eines Gurtrückhaltesystems angeordnet ist, wobei ein Rückhalteorgan mit einem ersten Ende des Rückhalteorgans an der Vertikalstütze angeordnet ist, wobei das Rückhalteorgan sich ausgehend von der Vertikalstütze entgegen der Sitzrichtung oder Fahrtrichtung des Fahrzeugs weg von der Vertikalstütze erstreckt, wobei das Rückhalteorgan mit einem zweiten Ende an einem Fahrzeugdach und/oder einer Fahrzeugsäule des Fahrzeugs anordenbar ausgebildet ist. Hierdurch ist eine verbesserte Krafteinleitung einer Kraft vom Gurtgestell über das Rückhalteorgan auf das Fahrzeug realisierbar. Auch ist hierdurch eine Einbaumöglichkeit des Gurtgestells im Fahrzeug verbessert.

Ein Gurtrückhaltesystem oder auch ein Personenrückhaltesystem ist beispielsweise als eine Sicherheitsgurtanordnung, z.B. als ein Mehrpunktgurt-Sicherheitssystem oder z.B. konkret als ein Dreipunktgurt-Sicherheitssystem, ausgebildet. Beispielsweise ist am Gurtgestell eine Komponente des Gurtrückhaltesystems anbringbar. Zum Beispiel ist eine derartige Komponente als ein Gurtaufroller, als eine Gurtumlenkanordnung zur Richtungsänderung des daran vorbeigeführten Gurts, als eine Halterung zur Fixierung eines Gurtendes eines Gurts des Gurtrückhaltesystem und/oder als ein Gurtschloss, an dem ein Einsteckteil lösbar einrastbar ist, vorhanden. Beispielsweise ist der Gurt mittels des Einsteckteils als eine Schlaufe ausziehbar vorhanden.

Beispielsweise umfasst das Gurtrückhaltesystem einen Gurt, einen Gurtaufroller, eine Gurtschließe, ein Gurtschloß und die Gurtumlenkanordnung. Zum Beispiel ist das Gurtrückhaltesystem als ein 3-Punkt-Gurtsystem ausgebildet. Zum Beispiel ist der Gurt als ein Sicherheitsgurt vorhanden.

Beispielsweise muss das vorgeschlagene Gurtgestell konstruktiv bzw. mechanisch ausgelegt sein, einer maximal tolerierbaren bzw. möglichen Belastung, insbesondere bei dynamischen Belastungsvorgängen, einen ausreichenden Widerstand entgegensetzen zu können. Also entsprechende Kräfte und Momente aufzunehmen und weitergeben zu können. Beispielsweise muss das vorgeschlagenen Gurtgestell die vorhandenen Normen zur Typengenehmigung in Fahrzeugen erfüllen. Zum Beispiel muss das Gurtgestell die Verordnung (EG) 661/2009 des Europäischen Parlaments und des Rates und deren Änderungsnormen, die Verordnung (EU) 407/2011 des Europäischen Parlaments und des Rates der Europäischen Union und/oder die Regelung Nr. 14 der Wirtschaftskommission der Vereinten Nationen für Europa (UN/ECE) erfüllen.

Im eingebauten Zustand des Gurtgestells im Fahrzeug entspricht die relevante Belastungsrichtung des Gurtgestells in der Regel einer Sitzrichtung der gesicherten Person bzw. der Fahrtrichtung des Fahrzeugs. Bei einem Fahrzeug tritt eine maximale Belastung z.B. bei einem Aufprall des fahrenden Fahrzeugs gegen ein Hindernis auf, einem Crashfall. Aufgrund der abgebremsten Masse der im Fahrzeug sitzenden und gesicherten Person wird über den Sicherheitsgurt des Gurtrückhaltesystems eine ruckartig wirkende Zugkraft bzw. ein daraus resultierendes Moment in der Belastungsrichtung bzw. in Fahrtrichtung am Gurtgestell wirksam.

Beispielsweise erstreckt sich eine Ebene des Fahrzeugbodens und/oder eine Ebene des Fahrzeugdachs in Fahrtrichtung des Fahrzeugs. Denkbar ist auch, dass die Ebene des Fahrzeugbodens und/oder die Ebene des Fahrzeugdachs sich quer zur Fahrtrichtung des Fahrzeugs erstreckt. Vorstellbar ist, dass der Fahrzeugboden als ein Innenraumfahrzeugboden vorhanden ist. Vorstellbar ist auch, dass eine Fahrzeugträgerstruktur des Fahrzeugs den Fahrzeugboden bildet. Zum Beispiel ist die Ebene des Fahrzeugbodens parallel zu einer Fahrebene des Fahrzeugs ausgerichtet vorhanden. Beispielsweise erstreckt sich die Ebene des Fahrzeugbodens parallel zur Sitzrichtung und/oder der Fahrtrichtung des Fahrzeugs. Denkbar ist weiter, dass das Fahrzeugdach, ein Fahrzeugdachholm des Fahrzeugs iund/oder die Fahrzeugsäule eine Fahrzeugträgerstruktur des Fahrzeugs bildet. Beispielsweise ist die Fahrzeugdachebene parallel zu einer Fahrebene des Fahrzeugs ausgerichtet. Zum Beispiel erstreckt sich die Fahrzeugdachebene parallel zur Sitzrichtung und/oder der Fahrtrichtung des Fahrzeugs.

Als Fahrzeugträgerstruktur bzw. Fahrzeugrahmen oder auch Fahrgestell sind die tragenden Teile des Fahrzeugs zu verstehen. Die tragenden Teile des Fahrzeugs haben hierbei die Funktion, den Antrieb, die Karosserie und/oder die Nutzlast zu tragen und gegen äußere Krafteinwirkung zu stabilisieren. Zu den tragenden Teilen des Fahrzeugs gehört beispielsweise auch eine Fahrzeugsäule des Fahrzeugs oder ein Fahrzeugdachholm des Fahrzeugs.

Der Fahrzeugboden wiederum bildet den unteren Abschluss eines Fahrzeugsinnenraums oder eine Ladefläche des Fahrzeugs. Der Fahrzeugboden ist z.B. am Fahrzeugrahmen befestigt, z.B. in verikaler Richtung vom Fahrzeugrahmen beabstandet oder aufliegend/anliegend am Fahrzeugrahmen. Beispielsweise bildet der Fahrzeugboden eine Trittfläche für eine Nutzer des Fahrzeugs.

Beispielsweise ist die Fahrtrichtung des Fahrzeugs in eine Sitzrichtung oder Blickrichtung eines Fahrers des Fahrzeugs zur Fahrzeugfront des Fahrzeugs zu sehen. Zum Beispiel ist die Fahrtrichtung des Fahrzeugs eine Fahrtrichtung des Fahrzeugs in Vorwärtsrichtung. Zum Beispiel wird die Fahrebene des Fahrzeugs durch eine Straße gebildet, auf welcher das Fahrzeug fährt. Beispielsweise erstreckt sich die Fahrtrichtung des Fahrzeugs in einer Richtung von einem Fahrzeugheck des Fahrzeugs zur Fahrzeugfront des Fahrzeugs. Eine Sitzrichtung des Gurtgestells ist beispielsweise in Fahrtrichtung des Fahrzeugs zu sehen.

Beispielsweise ist das Rückhalteorgan mit seinem zweiten Ende an einer Dachstruktur des Fahrzeugsdachs befestigbar. Denkbar ist, dass das Dach einen quer zur Fahrtrichtung des Fahrzeugs verlaufenden Fahrzeugdachholm aufweist. Denkbar ist, dass der Fahrzeugdachholm Fahrzeugsäulen des Fahrzeugs miteinander verbindet. Damit ist die Fahrzeugstruktur verstärkt ausgebildet.

Ein mit dem Gurtgestell bildbarer Fahrzeug- bzw. Personensitz weist beispielsweise eine Sitzstruktur mit einer Sitzfläche auf, welche sich an der Vorderseite des Fahrzeugsitz und damit an der Vorderseite des Gurtgestells bzw. der Vorderseite der Vertikalstütze befindet, wobei die Vorderseite der Vertikalstütze im angeordneten Zustand des Gurtgestells im Fahrzeug in Fahrtrichtung ausgerichtet ist. Beispielsweise erstreckt sich eine Sitzrichtung parallel zu einer Normalen der Vorderseite der Vertikalstütze und von der Vorderseite abstehend.

Vorgeschlagen wird nun, dass das Rückhalteorgan mit seinem ersten Ende an einer Rückseite der Vertikalstütze angeordnet ist. Denkbar ist, dass das Rückhalteorgan unmittelbar an der Vertikalstütze angeordnet ist. Beispielsweise ist das Rückhalteorgan an das Gurtgestell und/oder die Vertikalstütze angeschraubt, angenietet und/oder angeschweißt vorhanden. Vorstellbar ist, dass das Rückhalteorgan lösbar oder unlösbar mit dem Gurtgestell, z.B. der Vertikalstütze verbunden ist. Beispielsweise ist die Rückseite der Vertikalstütze gegenüberliegend und beabstandet von der Vorderseite der Vertikalstütze vorhanden.

Beispielsweise ist das Rückhalteorgan an einem Montagepunkt des Gurtgestells mit dem Gurtgestell verbunden. Zum Beispiel weist das Gurtgestell einen einzigen Montagepunkt auf. Beispielsweise ist ein Montagepunkt, z.B. der einzige Montagepunkt, an der Vertikalstütze und/oder einer Querstrebe ausgebildet. Ein Montagepunkt am Gurtgestell ist beispielsweise in Form einer Bohrung, eines Bolzen oder in Form einer Öse vorhanden.

Zum Beispiel ist die Vertikalstütze einstückig ausgebildet. Denkbar ist, dass die Vertikalstütze als ein Vierkantrohr vorhanden ist. Beispielweise ist die Vertikalstütze aus Metall ausgebildet. Beispielsweise verläuft die Vertikalstütze von einem unteren Ende der Vertikalstütze bis zu einem oberen Ende der Vertikalstütze durchgehend geradlinig.

Beispielsweise weist das Gurtgestell mehrere Rückhalteorgane auf. Denkbar ist, dass das Gurtgestell ein erstes und ein zweites Rückhalteorgan aufweist. Zum Beispiel weist das Gurtgestell genau ein Rückhalteorgan oder genau zwei Rückhalteorgane auf. Vorstellbar ist, dass alle Rückhalteorgane an einem gleichen, z.B. einzigen Montagepunkt am Gurtgestell befestigt sind.

Vorstellbar ist jedoch auch, dass jeweils ein Rückhalteorgan an jeweils einem Montagepunkt am Gurtgestell befestigt ist und die Montagepunkte voneinander beabstandet am Gurtgestell ausgebildet sind und jedes Rückhalteorgan mit dem zweiten Ende im Bereich des Fahrzeugdachs mit dem Fahrzeug verbindbar ist, z.B. ausschließlich. Zum Beispiel sind die Rückhalteorgane mit den zweiten Enden mit dem Dachholm des Fahrzeugs verbindbar.

Auch wird vorgeschlagen, dass das Gurtgestell ein erstes und ein zweites Rückhalteorgan aufweist, wobei das erste und das zweite Rückhalteorgan an einem ersten Ende an einem Montagepunkt der Vertikalstütze mit der Vertikalstütze verbunden sind, wobei das erste Rückhalteorgan mit einem zweiten Ende an einem Fahrzeugdach und/oder einer Fahrzeugsäule des Fahrzeugs anordenbar ausgebildet ist, wobei das zweite Rückhalteorgan mit einem zweiten Ende an einem Fahrzeugdach und/oder einer Fahrzeugsäule des Fahrzeugs anordenbar ausgebildet ist, wobei das erste und das zweite Rückhalteorgan derart am Gurtgestell angeordnet sind, dass die zweiten Enden des ersten und des zweiten Rückhalteorgans beabstandet voneinander vorhanden sind. Hierdurch ist beispielsweise eine Krafteinleitung auf das Fahrzeug verbessert. Ebenfalls ist hierdurch eine Kraftrichtung auf das Fahrzeug und/oder auf das Gurtgestell definierbar.

Beispielsweise sind im angeordneten Zustand des Gurtgestells im Fahrzeug die beiden Enden der zwei Rückhalteorgane beabstandet zueinander am Fahrzeug befestigt.

Vorstellbar ist auch, dass Rückhalteorgan ein erstes Ende aufweist und zwei zweite Enden. Denkbar ist beispielsweise, dass das Rückhalteorgan in Form eines V oder in Form eines Y ausgebildet ist. Zum Beispiel ist das Rückhalteorgan im angeordneten Zustand am Fahrzeug in Form eines Vs oder in Form eines Ys vorhanden.

Beispielsweise ist das Rückhalteorgan mit seinem ersten Ende am Gurtgestell befestigt und mit seinen zweiten Enden am Fahrzeug, wobei die zweiten Enden im angeordneten Zustand am Fahrzeug beispielsweise voneinander beabstandet vorhanden sind. Zum Beispiel erstreckt sich das Rückhalteorgan ausgehend von seinem ersten Ende zunächst über eine erste Länge einteilig bis zu einem Verzweigungspunkt und erstreckt sich ab dem Verzweigungspunkt über eine zweite Länge bis zu einem ersten zweiten Ende und über eine dritte Länge bis zu einem zweiten zweiten Ende (Y- Form). Denkbar ist, dass die zweite und die dritte Länge des Rückhalteorgans gleich lang sind. Vorstellbar ist jedoch auch, dass die zweite und die dritte Länge des Rückhalteorgans verschieden lang ausgebildet sind. Vorstellbar ist auch, dass zwei Rückhalteorgane in Form eines Ys vorhanden sind. So können die beiden Rückhalteorgane beispielsweise an einem gemeinsamen Montagepunkt am Gurtgestell mit einem ersten Ende angeordnet sein und ausgehend von dem ersten Ende zunächst parallel zueinander, z.B. anliegend aneinander, bis zu einem Verzweigungspunkt verlaufen. Ab dem Verzweigungspunkt können die beiden Rückhalteorgane dann auseinanderlaufen, z.B. V-förmig. Denkbar ist weiter, dass im Bereich des Verzweigungspunkt beide Rückhalteorgane eine Biegung aufweisen.

Sind zwei oder mehr Rückhalteorgane vorhanden, so ist es vorstellbar, dass die Rückhalteorgane gleich lang ausgebildet ist. Denkbar ist jedoch auch, dass die Rückhalteorgane unterschiedliche Längen aufweisen. Hierdurch ist das Gurtgestell auf eine Einbausituation im Fahrzeug anpassbar ausgebildet.

Auch wird vorgeschlagen, dass das Rückhalteorgan als ein Gurtband ausgebildet ist. Hierdurch ist eine flexbile Positionierung des Rückhalteorgans am Fahrzeug möglich.

Beispielsweise ist das Gurtband aus Metall, z.B. als ein Metallband oder Blechband, ausgebildet. Beispielsweise ist das Gurtband aus einem Gewebe ausgebildet, z.B. aus einem Kunststoffgewebe. Zum Beispiel ist das Rückhalteorgan aus Polypropylen, Polyester, Polyamid und/oder aus PVC ausgebildet. Denkbar ist auch, dass das Gurtband aus einem Metallgewebe ausgebildet ist. Beispielsweise ist das Rückhalteorgan als ein beispielsweise flexibles Gurtband oder flexibles Metallband ausgebildet. Hierdurch ist das Rückhalteorgan vergleichsweise flexibel ausbildbar.

Ebenfalls wird vorgeschlagen, dass am Montagepunkt das erste Ende des Rückhalteorgans mit der Vertikalstütze verbunden ist, wobei der Montagepunkt in einem Bereich zwischen dem unteren und dem oberen Ende der Vertikalstütze ausgebildet ist, wobei das Rückhalteorgan derart am Gurtgestell angeordnet ist, dass sich das Rückhalteorgan ausgehend vom Montagepunkt entlang der Vertikalstütze bis zum oberen Ende der Vertikalstütze erstreckt und dann entgegen der Sitzrichtung weg von der Vertikalstütze bis zum zweiten Ende des Rückhalteorgans. Hierdurch ist eine vergleichsweise platzsparende Ausbildung des Gurtgestells realisierbar.

Weiter wird vorgeschlagen, dass das Rückhalteorgan im angeordneten Zustand im Fahrzeug ausgehend vom Montagepunkt am Gurtgestell zunächst in vertikaler Richtung bis zu einer Biegung verläuft und anschließend sich in horizontaler Richtung bis zum zweiten Ende erstreckt. Denkbar ist, dass das Rückhalteorgan zumindest abschnittsweise anliegend an der Vertikalstütze vorhanden ist. Beispielsweise ist es abschnittsweise, z.B. über eine Längenabschnitt, mit der Vertikalstütze verbunden, z.B. angeklebt, angeklettet und/oder angeklemmt. Zum Beispiel ist das Rückhalteorgan derart abschnittsweise mit der Vertikalstütze verbunden, dass im Crashfall das Rückhalteorgan an diesem Abschnitt sich von der Vertikalstütze, oder umgekehrt, lösen kann. Beispielsweise ist das Rückhalteorgan am Montagepunkt derart mit dem Gurtgestell oder der Vertikalstütze verbunden, dass im Crashfall die Verbindung nicht gelöst ist.

Vorstellbar ist es, dass das Rückhalteorgan, z.B. im Bereich seiner Biegung, am oberen Ende der Vertikalstütze und/oder am Fahrzeugdach befestigt ist, z.B. angeklemmt. Beispielsweise weist das Gurtgestell ein Halteelement auf, mittels welchem das Rückhalteorgan am oberen Ende der Vertikalstütze und/oder am Fahrzeugdach gehalten und/oder angeklemmt werden kann. Beispielsweise ist das Halteelement derart vorhanden, dass im Crashfall das Haltelement das Rückhalteorgan freigibt. Durch das Halteelement ist eine Montage des Rückhalteorgans am Fahrzeug erleichtert.

Beispielsweise ist das Rückhalteorgan ausgehend von seinem ersten Ende entlang seiner Längserstreckung zunächst anliegend an der Vertikalstütze vorhanden, z.B. über einen ersten Längenabschnitt des Rückhalteorgans. Denkbar ist, dass das Rückhalteorgan im angeordneten Zustand am Fahrzeug eine Biegung aufweist. Beispielsweise erstreckt sich das Rückhalteorgan mit einem zweiten und/oder einem dritten Längenabschnitt entlang des Fahrzeugdachs. Vorstellbar ist, dass der erste Längenabschnitt des Rückhalteorgans über die Biegung in den zweite Längenabschnitt des Rückhalteorgans übergeht.

Weiter wird vorgeschlagen, dass die Vertikalstütze den Montagepunkt aufweist, wobei am Montagepunkt das erste Ende des Rückhalteorgans mit der Vertikalstütze verbunden ist, wobei das Gurtgestell Kopfstützenverbindungsmittel aufweist, um einen Kopfstütze am Gurtgestell anzuordnen, wobei der Montagepunkt oberhalb der Kopfstützenverbindungsmittel an der Vertikalstütze ausgebildet ist. Hierdurch sind die Stabilitätskriterien für das Gurtgestell erfüllbar.

Beispielsweise weist das Gurtgestell eine Querstrebe oder zwei Querstreben auf. Beispielsweise erstreckt sich die Querstrebe in einer Längserstreckung quer zur Längserstreckung der Vertikalstütze. Denkbar ist, dass die Querstrebe sich in einer horizontalen Richtung erstreckt, z.B. quer zur Fahrtrichtung. Vorstellbar ist, dass die Querstrebe mit der Vertikalstütze verbunden ist, z.B. unlösbar. Denkbar ist weiter, dass die Querstrebe die Kopfstützenverbindungsmittel aufweist. Beispielsweise sind die Kopfstützenverbindungsmittel als Hülsen vorhanden, in welche eine Kopfstützenstrebe der Kopfstütze eingreifend angeordnet werden kann. Beispielsweise weist das Gurtgestell zwei oder vier Kopfstützenverbindungsmittel auf. Herkömmlicherweise wird eine Kopfstütze an zwei Kopfstützenverbindungsmittel, z.B. zwei Hülsen, angeordnet. Beispielsweise ist die Querstrebe als ein Vierkantrohr vorhanden und weist Bohrungen in Form der Kopfstützenverbindungsmittel auf. Denkbar ist auch, dass die Hülsen an der Querstrebe befestigt, z.B. in die Bohrungen eingesetzt, sind.

Außerdem wird vorgeschlagen, dass die Vertikalstütze eine Länge entlang ihrer Längsachse aufweist, sodass die Vertikalstütze im angeordneten Zustand am Fahrzeug aufrecht stehend mit einem unteren Ende am Fahrzeugboden eines Fahrzeugs befestigbar ist und mit einem oberen Ende am Fahrzeugdach oder einer Fahrzeugdecke des Fahrzeugs, wobei das untere und das obere Ende der Vertikalstütze entlang der Längsachse der Vertikalstütze voneinander beabstandet sind. Hierdurch ist eine Integration des Gurtgestells in ein Fahrzeug verbessert. Auch ist hierdurch eine Stabilität des Gurtgestells verbesserbar.

Beispielsweise ist die Vertikalstütze mit dem unteren Ende am Fahrzeugboden und/oder einem Fahrzeugrahmen des Fahrzeugs befestigbar. Zum Beispiel ist die Vertikalstütze im angeordneten Zustand am Fahrzeug mit dem unteren Ende aufstehend auf dem Fahrzeugboden des Fahrzeugs vorhanden. Denkbar ist, dass die Vertikalstütze mit dem unteren Ende auf einer Befestigungsleiste des Gurtgestells und/oder einem Querholm des Gurtgestells aufstehend befestigt ist. Denkbar ist, dass die Vertikalstütze unmittelbar mit dem Querholm verbunden ist oder unmittelbar an diesem ansteht, z.B. mit dem unteren Ende. Beispielsweise ist die Vertikalstütze mit dem untere Ende auf dem Querholm unmittelbar aufstehend vorhanden.

Zum Beispiel ist die Vertikalstütze ausgebildet, mit dem oberen Ende an einem Fahrzeugdach und/oder einem Fahrzeugdachholm des Fahrzeugs angeordnet zu werden. Denkbar ist, dass die Vertikalstütze im angeordneten Zustand im Fahrzeug am unteren Ende mit dem Fahrzeug verbunden ist und am oberen Ende mit dem Fahrzeug verbunden ist, z.B. unmittelbar. Beispielsweise ist die Vertikalstütze vom unteren Ende bis zum oberen Ende durchgehend, z.B. einstückig ausgebildet.

Beispielsweise ist das Gurtgestell derart ausgebildet, dass die Vertikalstütze nicht unmittelbar mit dem Fahrzeugboden und/oder dem Fahrzeugrahmen verbindbar ist. Denkbar ist, dass das Gurtgestell dazu ausgebildet ist, die Vertikalstütze mittelbar über die Befestigungsleiste mit dem Fahrzeugboden und/oder dem Fahrzeugrahmen zu verbinden. Vorstellbar ist, dass die Vertikalstütze am Fahrzeugboden befestigbar ist, zum Beispiel zur Positionierung.

Beispielsweise ist das Gurtgestell derart ausgebildet, dass es mit der Vertikalstütze und/oder mit dem Querholm überhalb eines Fahrzeugtanks des Fahrzeugs, z.B. überhalb einer Fahrzeugbatterie des Fahrzeugs, aufstehend auf einem Fahrzeugboden am Fahrzeug anordenbar ist. Vorgeschlagen wird auch, dass im angeordneten Zustand des Gurtgestells am Fahrzeug der Querholm, beispielsweise ausschließlich, aufstehend auf dem oder anliegend an dem Fahrzeugboden angeordnet ist.

Beispielsweise erstreckt sich die Vertikalstütze vom unteren Ende bis zum oberen Ende entlang der Längsachse der Vertikalstütze. Beispielsweise sind entlang der Längsachse in vertikaler Richtung gesehen ausgehend vom unteren Ende in Richtung oberes Ende der Vertikalstütze die Kopfstützenverbindungsmittel unterhalb des Montagepunkts vorhanden.

Zum Beispiel weist die Vertikalstütze entlang ihrer Längsachse eine Länge auf, sodass die Vertikalstütze im angeordneten Zustand am Fahrzeug am unteren Ende auf dem Fahrzeugboden aufstehend und mit dem oberen Ende an der Fahrzeugdecke des Fahrzeugs anstehend im Fahrzeug anordenbar ist. Beispielsweise weist das Gurtgestell ein Montageelement auf, um die Vertikalstütze und/oder den Querholm mit dem Fahrzeugboden zu verbinden. Das Montageelement ist beispielsweise als eine Schraube, ein Gewinde und/oder eine Hülse vorhanden. Hierdurch ist eine Positionierung des Gurtgestells im Fahrzeug erleichtert.

Beispielsweise erstreckt sich die Vertikalstütze vom unteren Ende bis zum oberen Ende entlang ihrer Längsachse über eine Länge von 1800mm bis 3000mm, Zum Beispiel ist die Vertikalstütze 1800mm, 1900mm, 2000mm, 2200mm, 2400mm, 2600mm, 2800mm oder 3000mm lang. Beispielsweise erstreckt sich die Vertikalstütze entlang ihrer Länge, z.B. vom unteren Ende der Vertikalstütze bis zum oberen Ende der Vertikalstütze, über mindestens 80% oder über mindestens 90% des Abstands zwischen Fahrzeugboden und Fahrzeugdach.

Auch wird vorgeschlagen, dass das erste Ende des Rückhalteorgans und/oder der Montagepunkt vom unteren Ende der Vertikalstütze oder von einem unteren Ende des Gurtgestells mindestens 900mm bis 1200mm beabstandet ist. Beispielsweise wird das untere Ende des Gurtgestells durch eine Aufstellfläche des Gurtgestells gebildet, mit welcher das Gurtgestell im angeordneten Zustand am Fahrzeug auf einer Bodenfläche des Fahrzeugs aufstehend angeordnet ist.

Beispielsweise ist das erste Ende des Rückhalteorgans und/oder der Montagepunkt im angeordneten Zustand des Gurtgestells vom Fahrzeugboden in vertikaler Richtung mindestens 900mm bis 1200mm beabstandet. Beispielsweise ist der Montagepunkt vom unteren Ende der Vertikalstütze 900mm bis 1200mm beabstandet an der Vertikalstütze vorhanden.

Beispielsweise ist das erste Ende des Rückhalterorgans und/oder der Montagepunkt im angeordneten Zustand des Gurtgestells am Fahrzeug ausgehend vom Fahrzeugboden in einer Höhe von 900mm bis 1200mm vorhanden, z.B. in einer Höhe von 900mm, 950mm, 1000mm, 1050mm, 1100mm, 1150mm oder 1200mm.

Weiter wird vorgeschlagen, dass das Gurtgestell eine zweite Vertikalstütze aufweist, wobei die zweite Vertikalstütze ein Anbindungselement zur Anbindung der zweiten Vertikalstütze an einer Fahrzeugsäule oder einer Fahrzeugseitenwand aufweist. Hierdurch ist eine stabile Ausbildung des Gurtgestells im Hinblick auf die vorangegangen genannten Stabilitätskriterien verbessert.

Beispielsweise verbindet die Querstrebe und/oder der Querholm die erste mit der zweiten Vertikalstütze. Beispielsweise ist der Montagepunkt an der ersten Vertikalstütze vorhanden und das Anbindungselement an der zweiten Vertikalstütze. Das Anbindungselement ist beispielsweise als eine Metallleiste, als ein Metallwinkel und/oder als eine Schraube vorhanden. Denkbar ist, dass das Gurtgestell mit der zweiten Vertikalstütze anstehend an der Fahrzeugsäule oder der Fahrzeugwand des Fahrzeugs anordenbar ausgebildet ist.

Vorstellbar ist außerdem, dass an der Vertikalstütze, am Querholm und/oder an der Querstrebe eine Komponente des Gurtrückhaltesystems angeordnet ist. Denkbar ist auch, dass das Gurtgestell eine zweite Querstrebe aufweist, welche die erste mit der zweiten Vertikalstütze verbindet. Denkbar ist auch, dass der Querholm die erste mit der zweiten Vertikalstütze verbindet. Beispielsweise weist die zweite Querstrebe der beiden Querstreben die Kopfstützenverbindungsmittel auf. Denkbar ist auch, dass der Querholm die erste mit der zweiten Vertikalstütze verbindet.

Außerdem wird vorgeschlagen, dass das Gurtgestell eine Befestigungsleiste aufweist, wobei die Befestigungsleiste an einem unteren Ende der Vertikalstütze mit der Vertikalstütze verbunden ist, wobei an der Befestigungsleiste ein Montageelement zur Befestigung des Gurtgestells an einem Fahrzeugboden oder an einem Fahrzeugrahmen des Fahrzeugs ausgebildet ist, wobei die Befestigungsleiste ausgehend von der Vertikalstütze sich entgegen der Sitzrichtung weg von der Vertikalstütze erstreckt. Hierdurch ist das Gurtgestell vergleichsweise variable in einem Fahrzeug anbringbar.

Denkbar ist, dass eine einzige Befestigungsleiste am Gurtgestell vorhanden ist. Vorstellbar ist außerdem, dass die Befestigungsleiste ausgehend von der Vorderseite der Vertikalstütze sich ausschließlich entgegen der Fahrtrichtung erstreckend vorhanden ist. Beispielsweise ist die Befestigungsleiste mit einem Ende an der Rückseite der Vertikalstütze anstehend oder bündig mit der Vorderseite der Vertikalstütze vorhanden. Vorstellbar ist ebenfalls, dass die Befestigungsleiste vor der Montage am Fahrzeug in der Länge verstellbar vorhanden ist.

Auch wird vorgeschlagen, dass eine einzige Befestigungsleiste das Gurtgestell mit dem Fahrzeug im Bereich des Bodens verbindet, z.B. mit dem Fahrzeugboden oder dem Fahrzeugrahmen. Beispielsweise ist das Gurtgestell einzig mittels der Befestigungsleiste im Bereich des Fahrzeugbodens mit dem Fahrzeug verbindbar, beispielsweise mit dem Fahrzeugrahmen unterhalb des Fahrzeugbodens. Denkbar ist auch, dass das Gurtgestell an einer Stelle über die Befestigungsleiste mit dem Fahrzeugrahmen im Bereich des Fahrzeugbodens.verbindbar ist und an einer weiteren Stelle über den Querholm im Bereich des Fahrzeugbodens mit dem Fahrzeugrahmen verbindbar ist. Hierdurch ist eine vergleichsweise variable Anbringung bzw. Positionierung im Fahrzeug realisierbar.

Beispielsweise weist das Gurtgestell eine einzige Befestigungsleiste auf, welche sich ausgehend von der Vertikalstütze ausschließlich entgegen der Fahrtrichtung oder entgegen der Sitzrichtung von der Vertikalstütze weg erstreckt. Denkbar ist auch, dass das Gurtgestell eine einzige Befestigungsleiste aufweist, welche sich ausgehend von der Vertikalstütze ausschließlich in Fahrtrichtung oder in Sitzrichtung von der Vertikalstütze weg erstreckt. Beispielsweise erstreckt sich die Befestigungsleiste entlang ihrer Länge parallel zur Sitzrichtung und/oder zur Fahrtrichtung des Fahrzeugs. Hierdurch ist das Gurtgestell vergleichsweise raumsparend und gewichtsreduziert ausgebildet.

Ist die Befestigungsleiste entgegen der Sitzrichtung abstehend am Gurtgestell vorhanden, erstreckt sich die Befestigungsleiste über eine Länge zwischen 400mm und 3000mm, z.B. zwischen 400mm und 2500mm oder zwischen 400mm und 2000mm. Denkbar ist, dass die Befestigungsleiste eine Länge von 400mm, 500mm, 600mm, 700mm, 800mm, 900mm, 1000mm, 1200mm, 2400mm, 2600mm oder 3000mm aufweist.

Ist die Befestigungsleiste in Sitzrichtung abstehend am Gurtgestell vorhanden, erstreckt sich die Befestigungsleiste über eine Länge zwischen 200mm und 1500mm, z.B. über eine Länge zwischen 200mm und 1000mm oder über eine Länge zwischen 200mm und 800mm. Vorstellbar ist, dass die Befestigungsleiste dann eine Länge von 200mm, 300mm, 400mm, 500mm, 600mm, 700mm, 800mm, 900mm, 1000mm, 1200mm, 1400mm oder 1500mm aufweist.

Beispielsweise weist die Befestigungsleiste einen Befestigungspunkt auf, mittels welchem das Gurtgestell im angeordneten Zustand am Fahrzeug am Fahrzeugrahmen befestigbar ist. Beispielsweise ist die Befestigungsleiste am Befestigungspunkt verstärkt ausgebildet. Denkbar ist, dass der Befestigungspunkt als ein Bolzen und/oder als eine Bohrung an der Befestigungsleiste ausgebildet ist. Vorstellbar ist, dass die Befestigungsleiste am Befestigungspunkt mit dem Fahrzeugrahmen verschraubbar oder vernietbar ist. Vorstellbar ist auch, dass die Befestigungsleiste am Befestigungspunkt mit dem Fahrzeugrahmen gefügt, z.B. verschweißt ist.

Beispielsweise ist der Befestigungspunkt von der Vertikalstütze, insbesondere von der Rückseite der Vertikalstütze, entgegen der Fahrtrichtung oder entgegen der Sitzrichtung über einen Abstand von mindestens 300mm beabstandet. Denkbar ist, dass der Befestigungspunkt 300mm, 350mm, 400mm, 450mm, 500mm, 550mm, 600mm, 700mm, 800mm, 900mm, 1000mm, 1200mm, 2400mm, 2600mm oder 2800mm von der Vertikalstütze, insbesondere der Rückseite der Vertikalstütze, entgegen der Fahrtrichtung oder entgegen der Sitzrichtung, beabstandet ist.

Beispielsweise ist der Befestigungspunkt von der Vertikalstütze, insbesondere von der Vorderseite der Vertikalstütze, in Fahrtrichtung oder in Sitzrichtung über einen Abstand von mindestens 100mm beabstandet. Denkbar ist, dass der Befestigungspunkt 100mm, 150mm, 200mm, 250mm, 300mm, 400mm, 500mm, 600mm, 700mm, 800mm, 900mm, 1000mm, 1200mm, 1400mm oder 1450mm von der Vertikalstütze, insbesondere der Vorderseite der Vertikalstütze, in Fahrtrichtung oder in Sitzrichtung beabstandet ist.

Beispielsweise ist an der Vertikalstütze eine Komponente des Gurtrückhaltesystems angeordnet. Z.B. ist eine Komponente des Gurtrückhaltesystems unmittelbar an der Vertikalstütze angeordnet. Beispielsweise ist im Bereich des unteren Endes der Vertikalstütze ein Gurtaufroller an der Vertikalstütze befestigt. Denkbar ist auch, dass der Gurtaufroller an dem Querholm befestigt ist. Zum Beispiel ist an der Vertikalstütze ein Gurtumlenker angeordnet.

Vorgeschlagen wird auch, dass das Gurtgestell zwei Vertikalstützen aufweist. Denkbar ist, dass die beiden Vertikalstützen über eine Längserstreckung des Querholms oder über eine Längserstreckung einer Querstrebe des Gurtgestells voneinander beabstandet sind. Beispielsweise sind die beiden Vertikalstützen in einer horizontalen Richtung, z.B. in einer Richtung quer zur Sitzrichtung oder Fahrtrichtung, voneinander beabstandet vorhanden. Denkbar ist, dass eine der beiden Vertikalstützen dazu ausgebildet ist, mit einer Fahrzeugseitenwand oder mit einer Fahrzeugsäule des Fahrzeugs im angeordneten Zustand im Fahrzeug verbunden zu werden.

Beispielsweise ist in einer Richtung quer zur Sitzrichtung des Gurtgestells oder quer zur Fahrtrichtung des Fahrzeugs gesehen das Gurtgestell auf einer Seite ausschließlich mittels der Befestigungsleiste mit einem tragenden Teile des Fahrzeugs, dem Fahrzeugrahmen, verbindbar ist und auf einer zweiten Seiten ausschließlich an einem weiteren tragenden Teil des Fahrzeugs, z.B. einer Fahrzeugsäule. Vorstellbar ist weiter, dass das Gurtgestell zusätzlich im Dachbereich mit einem tragenden Teil des Fahrzeugs verbindbar ist, z.B mit einem Dachholm.

Auch wird vorgeschlagen, dass die Befestigungsleiste als ein Metallrohr, als ein Vierkantrohr und/oder als eine Leiste ausgebildet ist. Hierdurch ist die Befestigungsleiste vergleichsweise stabil ausgebildet.

Beispielsweise ist die Befestigungsleiste aus Stahl ausgebildet, z.B. in der Form eines Stahlrohrs. Denkbar ist auch, dass die Befestigungsleiste aus einem GFK-Material oder aus einem Kunststoff hergestellt ist. Beispielsweise ist die Befestigungsleiste in Form einer Leiste vorhanden, z.B. in Form einer L-Profil-Leiste, einer T-Profil-Leiste oder einer U-Profil-Leiste. Hierdurch ist die Befestigungsleiste als ein Element eines weiteren Fahrzeugmöbels integrierbar vorhanden. Denkbar ist, dass an der Befestigungsleiste zumindest abschnittsweise ein Fahrzeugmöbel, z.B. einer Duschkabine, befestigbar ist.

Weiter wird vorgeschlagen, dass das Gurtgestell ein Stützelement aufweist, wobei das Stützelement mit einem ersten Ende an der Vertikalstütze und/oder an einer Querstrebe, z.B. der ersten Querstrebe, befestigt ist, wobei das Stützelement in Sitzrichtung von der Vertikalstütze und/oder der Querstrebe abstehend ausgebildet ist, wobei das Stützelement mit einem zweiten Ende an einer Fahrzeugwand und/oder an einer Fahrzeugsäule befestigbar ist. Beispielsweise steht das Stützelement in Sitzrichtung und quer zur Sitzrichtung, z.B. in Richtung Fahrzeugwand von der Vertikalstütze oder der Querstrebe ab.

Beispielsweise weist das Gurtgestell ein Gurtrückhaltesystem für zwei Personen auf, z.B. in Form von zwei Dreipunktgurt-Sicherheitssystemen. Vorstellbar ist, dass eine Komponente eines ersten der zwei Dreipunktgurt-Sicherheitssysteme an der ersten Vertikalstütze angeordnet ist und eine Komponente eines zweiten der zwei Dreipunktgurt-Sicherheitssysteme an der zweiten Vertikalstütze des Gurtgestells.

Ebenfalls wird vorgeschlagen, dass eine Längsachse der Befestigungsleiste quer zur Längsachse der Vertikalstütze ausgerichtet ist, wobei die Befestigungsleiste derart am unteren Ende der Vertikalstütze angeordnet ist, dass die Befestigungsleiste im angeordneten Zustand des Gurtgestells am Fahrzeug entlang der Längsachse der Befestigungsleiste aufliegend auf einem Fahrzeugboden des Fahrzeugs vorhanden ist. Hierdurch ist das Gurtgestell vergleichsweise platzsparend im Fahrzeug anbringbar. Beispielsweise ist hierdurch eine Integration des Gurtgestells

Beispielsweise ist die Befestigungsleiste derart am Gurtgestell angeordnet, dass die Befestigungleiste im angeordneten Zustand des Gurtgestells am Fahrzeug anliegend an oder aufliegend auf einem Fahrzeugboden anordenbar ist.

Beispielsweise ist die Befestigungsleiste mit der Vertikalstütze verbunden, z.B. unmittelbar. Z.B. ist die Befestigungsleiste anstehend an die Rückseite der Vertikalstütze an die Vertikalstütze angeordnet. Denkbar ist, dass die Befestigungsleiste unmittelbar mit der Rückseite der Vertikalstütze verbunden ist, z.B. angeschraubt oder verschweißt. Vorstellbar ist auch, dass die Befestigungsleiste anstehend an die Vorderseite der Vertikalstütze vorhanden ist, z.B. ist die Befestigungsleiste unmittelbar mit der Vorderseite der Vertikalstütze verbunden.

Außerdem wird vorgeschlagen, dass die Befestigungsleiste entlang der Längsachse ausziehbar ausgebildet ist. Hierdurch ist das Gurtgestell vergleichsweise einfach auf eine Fahrzeuggeometrie oder auf eine Position in einem Fahrzeug anpassbar ausgebildet.

Beispielsweise ist die Länge die Befestigungsleiste vor der Montage am Fahrzeug einstellbar. Zum Beispiel ist die Befestigungsleiste entlang der Längsachse der Befestigungsleiste in der Länge einstellbar ausgebildet. Beispielsweise weist die Befestigungsleiste zwei Befestigungsleistenabschnitte auf, wobei einer der zwei Befestigungsleistenabschnitte im zweiten der zwei Befestigungsleistenabschnitte beweglich geführt vorhanden ist.

Beispielsweise ist im angeordneten Zustand des Gurtgestells im Fahrzeug das Gurtgestell durch das Stützelement mit einer Fahrzeugsäule des Fahrzeugs verbindbar, z.B. abstützbar. Denkbar ist, dass das Stützelement als eine Leiste, z.B. als eine Metallleiste, oder als ein Rohr ausgebildet ist. Beispielsweise ist das Stützelement als eine L- oder T-förmige Leiste vorhanden. Vorgeschlagen wird weiter, dass das Stützelement in einer horizontalen Ebene in Fahrtrichtung abstehend am Gurtgestell befestigt oder angeordnet ist.

Außerdem wird vorgeschlagen, dass das Stützelement sich vom ersten Ende bis zum zweiten Ende des Stützelements in einer horizontal ausgerichteten Ebene erstreckt. Beispielsweise ist das Stützelement in einer horizontalen Ebene in Fahrtrichtung abstehend am Gurtgestell befestigt oder angeordnet. Beispielsweise ist das Gurtgestell, insbesondere das Stützelement derart ausgebildet, dass ein Sitzelement der Fahrzeug-Sitzanordnung anliegend oder aufliegend auf dem Stützelement angeordnet werden kann. Beispielsweise ist das Stützelement dazu ausgebildet, das Sitzelement abzustützen. Beispielsweise weist das Stützelement eine Auflagefläche zur Auflage des Sitzelements auf.

Auch wird vorgeschlagen, dass das Gurtgestell einen Stützfuß aufweist. Denkbar ist insbesondere, dass das Gurtgestell einen Stützfuß aufweist, wenn sich die Befestigungsleiste in Sitzrichtung weg von der Vertikalstütze erstreckt. Durch den Stützfuß ist ein vergleichsweise stabilers Gurtgestell ausbildbar.

Beispielsweise erstreckt sich der Stützfuß ausgehend von der ersten Querstrebe in Sitzrichtung und nach unten in Richtung einer Aufstellfläche des Gurtgestells. Beispielsweise ist der Stützfuß mit einem ersten Ende an der ersten Querstrebe befestigt und mit einem zweiten Ende aufstehend auf der Befestigungsleiste oder im angeordneten Zustand des Gurtgestells am Fahrzeug aufstehend auf dem Fahrzeugboden ausgebildet. Denkbar ist, dass der Stützfuß unmittelbar mit der Befestigungsleiste verbunden ist, z.B. verschraubt oder verschweißt.

Vorstellbar ist, dass der Stützfuß ausgehend von der Querstrebe sich zunächst in einer horizontalen Ebene und/oder in einer horizontalen Richtung erstreckt, z.B. mit einem ersten Stützfußabschnitt und dann abgewinkelt vorhanden ist, sodass der Stützfuß sich mit einem zweiten Stützfußabschnitt in einer vertikalen Ebene und/oder in einer vertikalen Richtung in Richtung Befestigungsleiste oder dem Fahrzeugboden erstreckt. Denkbar ist auch, dass der Stützfuß ausgehend von der Querstrebe in Sitzrichtung schräg nach unten verläuft. Vorstellbar ist weiter, dass der erste Stützfußabschnitt eine Auflagefläche für das Sitzelement der Fahrzeug-Sitzanordnung aufweist. Vorstellbar ist jedoch auch, dass das Gurtgestell keinen Stützfuß aufweist, welcher das Gurtgestell in Sitzrichtung nach vorne unten abstützt.

Auch wird vorgeschlagen, dass das Gurtgestell dazu ausgebildet ist, ein Fahrzeugsitz mit zwei Fahrzeugsitzplätzen bereitzustellen. Beispielsweise ist der Fahrzeugsitz dazu ausgebildet, zwei Fahrzeugsitzplätze bereitzustellen. Hierdurch ist eine vergleichsweise größere Passagierzahl während der Fahrt im Fahrzeug sicherbar.

Ebenfalls wird eine Fahrzeug-Sitzanordnung mit einem Gurtgestell nach einer der vorangegangen genannten Ausführungsformen vorgeschlagen. Beispielsweise ist die Fahrzeug-Sitzanordnung als ein Fahrzeugsitz und/oder als eine Fahrzeugsitzbank ausgebildet. Beispielsweise ist der Fahrzeugsitz dazu ausgebildet, zwei Fahrzeugsitzplätze bereitzustellen. Zum Beispiel weist der Fahrzeugsitz das Sitzelement auf. Denkbar ist, dass das Sitzelement aufliegend auf dem Stützfuß und/oder auf dem Stützelement aufliegend vorhanden ist.

Außerdem wird ein Fahrzeug mit einer Fahrzeug-Sitzanordnung nach einer der vorangegangen genannten Ausführungsformen oder mit einem Gurtgestell nach einer der vorangegangen genannten Ausführungsformen vorgeschlagen.

Zum Beispiel ist das Fahrzeug als ein Automobil, als ein Autobus, als ein Lastkraftwagen (LKW), als ein Caravan, als ein Wohnmobil oder auch als ein Camping-Mobil ausgebildet.

### Figurenbeschreibung

Weitere Merkmale und Vorteile der Erfindung sind anhand schematisch gezeigter Ausführungsbeispiele näher erläutert. Im Einzelnen zeigen:
- Figur 1: eine perspektivische Ansicht von schräg seitlich vorne oben auf eine erste Variante eines schematisch dargestellten Gurtgestells, welches in einem Fahrzeug angeordnet ist,
- Figur 2: eine seitliche Ansicht auf das Gurtgestell gemäß Figur 1, wobei das Gurtgestell sowohl in einem Grundzustand, als auch in einem Zustand im Crashfall dargestellt ist,
- Figur 3: eine perspektivische Ansicht von schräg seitlich vorne oben auf eine zweite Variante eines schematisch dargestellten Gurtgestells, welches in einem Fahrzeug angeordnet ist,
- Figur 4: eine seitliche Ansicht auf das Gurtgestell gemäß Figur 3, wobei das Gurtgestell sowohl in einem Grundzustand, als auch in einem Zustand im Crashfall dargestellt ist,
- Figur 5: eine perspektivische Ansicht von schräg seitlich vorne oben auf eine dritte Variante schematisch dargestellten eines Gurtgestells, welches in einem Fahrzeug angeordnet ist,
- Figur 6: eine seitliche Ansicht auf das Gurtgestell gemäß Figur 5, wobei das Gurtgestell sowohl in einem Grundzustand, als auch in einem Zustand im Crashfall dargestellt ist,
- Figur 7: eine perspektivische Ansicht von schräg seitlich vorne oben auf eine vierte Variante eines schematisch dargestellten Gurtgestells, welches in einem Fahrzeug angeordnet ist,
- Figur 8: eine seitliche Ansicht auf das Gurtgestell gemäß Figur 7, wobei das Gurtgestell sowohl in einem Grundzustand, als auch in einem Zustand im Crashfall dargestellt ist,
- Figur 9: eine perspektivische Ansicht von schräg seitlich vorne oben auf eine fünfte Variante eines schematisch dargestellten Gurtgestells, welches in einem Fahrzeug angeordnet ist,
- Figur 10: eine seitliche Ansicht auf das Gurtgestell gemäß Figur 5, wobei das Gurtgestell sowohl in einem Grundzustand, als auch in einem Zustand im Crashfall dargestell ist,

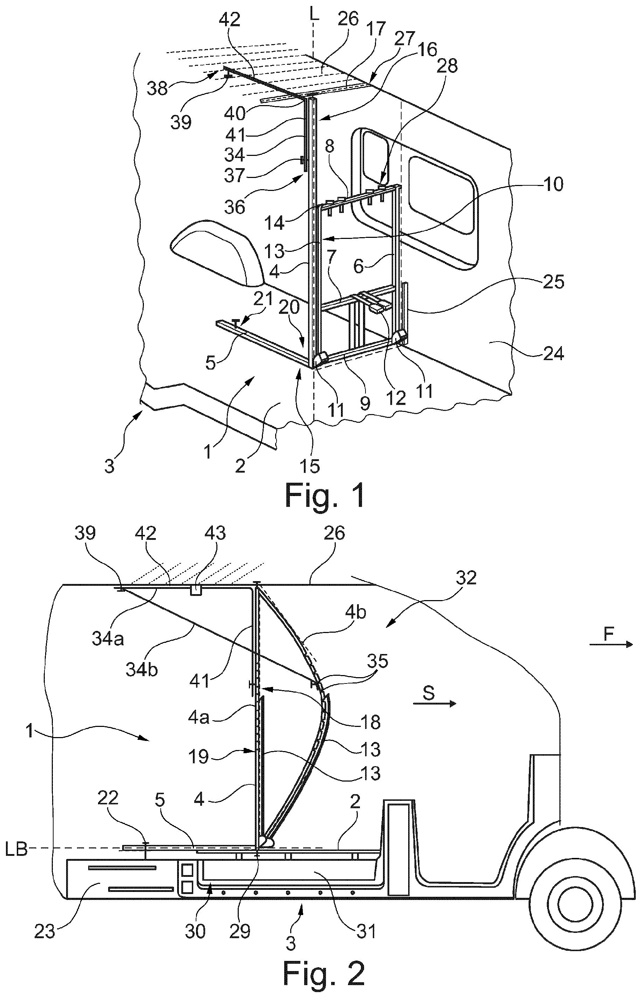

In Figur 1 ist ein erfindungsgemäßes Gurtgestell 1 dargestellt. Das Gurtgestell 1 ist beispielhaft aufstehend auf einem Fahrzeugboden 2 eines Fahrzeugs 3 angeordnet.

Das Gurtgestell 1 weist eine Vertikalstütze 4, sowie eine Befestigungsleiste 5 auf. Das Gurtgestell 1 kann auch eine zweite Vertikalstütze 6, sowie eine erste Querstrebe 7, eine zweite Querstrebe 8 und/oder einen Querholm 9 aufweisen. Am Gurtgestell 1 ist eine Komponente eines Gurtrückhaltesystems 10 ausgebildet. Beispielsweise weist das Gurtrückhaltesystem 10 einen Gurtaufroller 11, eine Gurtschließe 12, einen Gurt 13 und/oder eine Gurtumlenker 14 auf. Zum Beispiel weist das Gurtgestell 1 zwei Gurtrückhaltesysteme 10 auf, sodass zwei Personen am Gurtgestell 1 für eine Fahrt mit dem Fahrzeug 3 gesichert werden können.

Die Vertikalstütze 4 erstreckt sich entlang ihrer Längsachse L von einem unteren Ende 15 bis zu einem oberen Ende 16. Mit dem unteren Ende 15 ist die Vertikalstütze 4 im vorliegenden Ausführungsbeispiel aufstehend und anstehend auf dem Fahrzeugboden 2 angeordnet. Beispielsweise ist die Vertikalstütze 4 am unteren Ende 15 mit dem Fahrzeugboden 2 verbunden, z.B. mit einer Schraube 29 verschraubt (Figur 2). Mit dem oberen Ende 16 ist die Vertikalstütze 4 an einem Fahrzeugdachholm 17 befestigt. Die Vertikalstütze 4 weist eine Vorderseite 18 und eine Rückseite 19 auf.

Die Befestigungsleiste 5 ist mit einem Ende 20 anstehend an der Rückseite 19 der Vertikalstütze 4 angeordnet. Die Befestigungsleiste 5 ist aufliegend auf dem Fahrzeugboden 2 vorhanden und an einem Befestigungspunkt 21 der Befestigungsleiste 5 über einen Bolzen 22 mit einem Fahrzeugrahmen 23 des Fahrzeugs 3 verbunden.

Die Befestigungsleiste 5 erstreckt sich beispielsweise mit der Längsachse LB parallel zu einer Fahrtrichtung F des Fahrzeugs 3 und/oder parallel zu einer Sitzrichtung S des Gurtgestells 1. Die Befestigungsleiste 5 ist derart am Gurtgestell 1 angeordnet, dass die Befestigungsleiste 5 beispielsweise aufliegend auf und/oder anliegend an dem Fahrzeugboden 2 im angeordneten Zustand am Fahrzeug 3 vorhanden ist.

Beispielsweise weist das Gurtgestell 1 an der zweiten Querstrebe 8 Kopfstützenverbindungsmittel 28 zur Anordung einer Kopfstütze (nicht gezeigt) auf. Denkbar ist, dass die zweite Querstrebe 8 Kopfstützenverbindungsmittel 28 zur Anordnung von zwei Kopfstützen aufweist. Die Kopfstützenverbindungsmittel gemäß des Gurtgestells 1 sind als Aufnahmehülsen an der zweiten Querstrebe 8 ausgebildet.

Das Fahrzeug 3 weist beispielsweise eine Fahrzeugrahmen 23 auf. Auf dem Fahrzeugrahmen 23 ist beispielsweise der Fahrzeugboden 2 befestigt, z.B. beabstandet zum Fahrzeugrahmen 23. Weiter weist das Fahrzeug 3 eine Fahrzeugseitenwand 24 auf. Beispielsweise erstreckt sich in der Fahrzeugseitenwand 24 oder entlang der Fahrzeugseitenwand 24 eine Fahrzeugsäule 25, welche beispielsweise das Fahrzeugdach 26 des Fahrzeugs 3 abstützt. Denkbar ist, dass der Fahrzeugdachholm 17 an einem Ende 27 an der Fahrzeugsäule 25, z.B. unmittelbar befestigt ist. Das in den Figuren 1 bis 12 dargestellte Fahrzeug 3 ist beispielsweise in den Merkmalen gleich ausgebildet, lediglich die in den Figuren 1 bis 12 gezeigten Gurtgestellvarianten unterscheiden sich.

Denkbar ist auch, dass das Fahrzeug 3 einen Hohlraum 30 aufweist, in welchem beispielsweise ein Energiespeicher 31, z.B. ein Tank oder eine Fahrzeugbatterie, anordenbar ist. Aufgrund der vorteilhaften Ausbildung des Gurtgestells 1 ist es ermöglicht, die Vertikalstütze 4 überhalb des Hohlraums 30, z.B. überhalb des Energiespeichers 31, im Innenraum 32 des Fahrzeugs zu montieren.

Beispielsweise ist das Gurtgestell 1 derart am oberen Ende 16 der Vertikalstütze 4 mit dem Fahrzeug 3, z.B. mit dem Fahrzeugdachholm 17 verbindbar, bzw. im angeordneten Zustand mit dem Fahrzeug 3 verbunden, dass im Crashfall die Vertikalstütze 4 am oberen Ende 16 mit dem Fahrzeug 3 verbunden ist und bleibt, sowie, dass die Vertikalstütze 4 sich in Fahrtrichtung gemäß Figur 2 verformen kann. In Figur 2 ist die Vertikalstütze 4 des Gurtgestells 1 in einem Grundzustand 4a dargestellt und ein einem durch einen Crashfall verformten Zustand 4b dargestellt.

Wie in Fgur 2 dargestellt, kann die Vertikalstütze 4, beispielsweise um eine Verformung der Vertikalstütze vorzugeben oder zu steuern, eine Querschlitzung 35 aufweisen. Die Querschlitzung 35 der Veritkalstütze 4 ist beispielsweise in Form eines Schlitzes an der Vertikalstütze 4 vorhanden, welcher quer zur Längserstreckung L der Vertikalstütze 4 verläuft.

Beispeilsweise weist das Gurtgestell 1 ein Rückhalteorgan 34 auf. Das Rückhalteorgan 34 ist beispielsweise als ein Gurtband ausgebildet. Denkbar ist, dass das Rückhalteorgan 34 an einem ersten Ende 36 des Rückhalteorgans 34 an einem Montagepunkt 37 der Vertikalstütze 4 befestigt ist und mit einem zweiten Ende 38 des Rückhalteorgans 34 am Fahrzeugdach 26 oder einem Fahrzeugdachholm (nicht gezeigt). Beispielsweise ist das Rückhalteorgan 34 an die Vertikalstütze 4 und/oder das Fahrzeugdach 26 angeschraubt oder angenietet vorhanden.

Beispielsweise ist das Rückhalteorgan 34 mit dem zweiten Ende 38 an einem Anbringpunkt 39 befestigt, welcher in Fahrtrichtung F und in Sitzrichtung S gesehen hinter dem Gurtgestell 1 oder der Vertikalstütze 4 des Gurtgestells 34 ausgebildet ist.

Vorstellbar ist weiter, dass das Rückhalteorgan 34 im angeordneten Zustand am Fahrzeug 3 eine Biegung 40 aufweist. Beispielsweise erstreckt sich das Rückhalteorgan 34 entlang seiner Länge vom ersten Ende 36 bis zum zweiten Ende 38 und ist in Längenabschnitte unterteilbar. Zum Beispiel erstreckt sich das Rückhalteorgan 34 in einem ersten Längenabschnitt 41 vom ersten Ende 36 bis zur Biegung 40. Denkbar ist, dass der erste Längenabschnitt 41 im angeordneten Zustand am Fahrzeug 3 entlang oder parallel zur Längserstreckung L der Vertikalstütze 4 vorhanden ist. Vorstellbar ist, dass das Rückhalteorgan 34 mit dem ersten Längenabschnitt 41 an der Vertikalstütze 4 angeordnet, z.B. angeklebt oder angeklemmt, ist.

Beispielsweise geht der erste Längenabschnitt 41 mittels der Biegung 40 in einen zweiten Längenabschnitt 42 des Rückhalteorgans 34 über. Vorstellbar ist, dass das Rückhalteorgan 34 im angeordneten Zustand am Fahrzeug 3 entlang oder parallel zu einer Erstreckungsebene des Fahrzeugdachs 26, der Fahrtrichtung F und/oder der Sitzrichtung S am Fahrzeug 3 angeordnet ist. Beispielsweise ist der zweite Längenabschnitt 42 des Rückhalteorgans 34 mit einem Halteelement 43 am Fahrzeugdach 26 angeklemmt.

Wie in Figur 2 dargestellt ist das Rückhalteorgan 34 beispielsweise derart entlang seines Verlaufs an der Vertikalsstütze 4 und/oder dem Fahrzeugdach 26 angeordnet, dass das Rückhalteorgan 34 sich im Crashfall von der Vertikalstütze 4 und/oder dem Fahrzeugdach 26 entlang seines Verlaufs lösen kann. Vorteilhaft ist das Rückhalteorgan 34 derart am Montagepunkt 37 mit der Vertikalstütze 4 und am Anbringpunkt 39 mit dem Fahrzeugdach 26 verbunden, dass diese Verbindung im Crashfall nicht gelöst wird bzw. stabil genug ist, um nicht aufzubrechen. Hierdurch ist es möglich im Crashfall zunächst die durch den Crashfall auf das Gurtgestell 1 in Fahrtrichtung F wirkenden Kräfte durch eine Verformung des Gurtgestells 1 (siehe z.B. Verformung der Vertikalstützte vom Zustand 4a in den Zustand 4b) zu absorbieren und diese Verformung dann durch das Rückhalteorgan 34 zu stoppen, wenn das Rückhalteorgan 34 seinen vollständig gestreckten Zustand zwischen dem Montagpunkt 37 und dem Anbringpunkt 39 erreicht hat (Rückhalteorgan 34b).

Vorstellbar ist hierbei, dass im Crashfall aufgrund der einwirkenden Kräfte und der Verbindung der Vertikalstütze 4 mit dem Fahrzeugdach 26 und/oder einem Fahrzeugholm die einwirkende Kraft von der Vertikalstütze 4 auf das Fahrzeugdach 26 und/oder den Fahrzeugdachholm übertragen wird, sodass das Fahrzeugdach 26 und/oder der Fahrzeugdachholm ebenfalls eine Verformung erfahren. Hierdurch sind die technischen Vorgaben im Hinblick auf eine erlaubte Verformung des Gurtgestells 1 im Crashfall vorteilhaft erfüllbar. Insbesondere können hierdurch die Komponenten des Gurtgestells 1, z.B. die Vertikalstütze 4 im Vergleich zu bekannten Gurtgestellen vergleichsweise leicht ausgebildet werden.

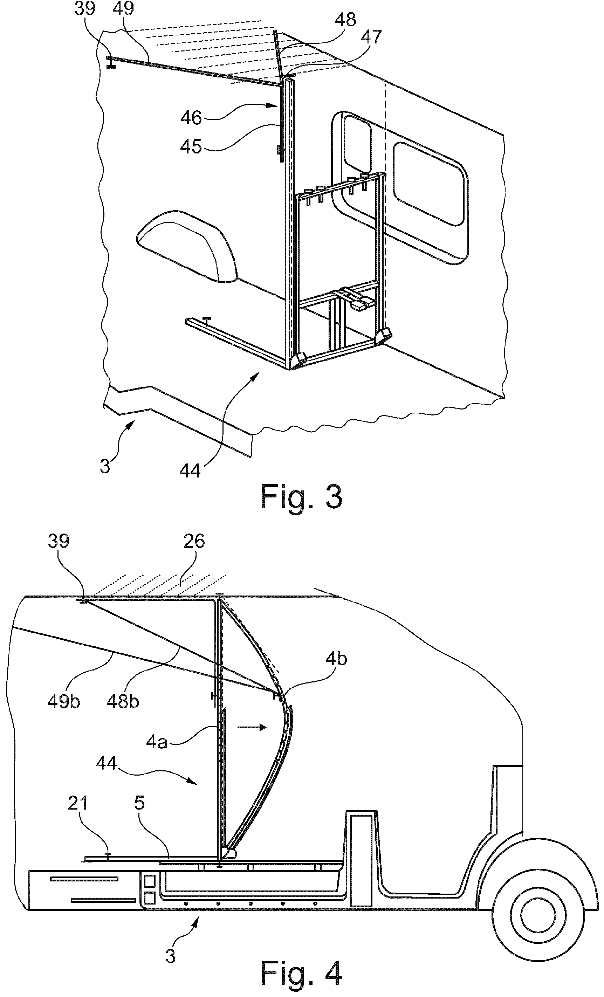

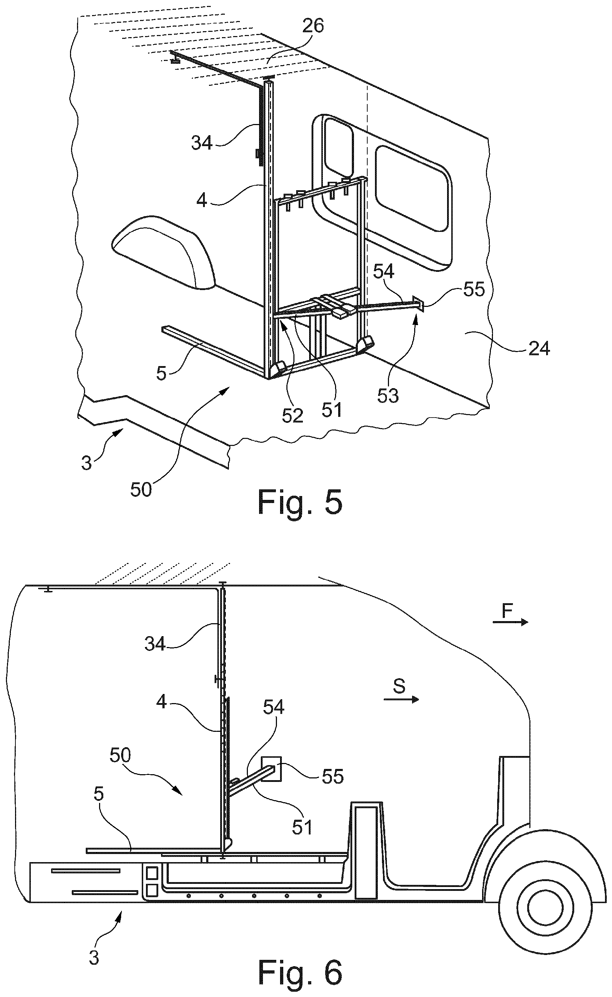

In den Figuren 3 und 4 ist eine weitere Variante eines Gurtgestells 44 dargestellt. Das Gurtgestell 44 unterscheidet sich vom Gurtgestell 34 in einer anderen Ausführungsform eines Rückhalteorgans 45. Das Rückhalteorgan 45 gemäß den Figuren 5 und 6 ist Y-förmig ausgebildet. Das Rückhalteorgan 45 weist einen ersten Längenabschnitt 46 auf, welcher analog dem ersten Längenabschnitt 41 des Rückhalteorgans 34 gemäß Figuren 1 und 2 vorhanden und angeordnet ist. Der erste Längenabschnitt 46 des Rückhalteorgans 45 erstreckt sich von einem ersten Ende bis zu einer Biegung 47. Im Bereich der Biegung 47 geht der erste Längenabschnitt 46 in einen zweiten und eine dritten Längenabschnitt 48, 49 über. Die beiden Längenabschnitte 48, 49 erstrecken sich ausgehend von dem Bereich der Biegung 47 entgegen der Fahrtrichtung F oder entgegen der Sitzrichtung S und quer dazu in einen Bereich hinter dem Gurtgestell 44 und sind jeweils an einem Anbringpunkt 39 mit dem Fahrzeugdach 26 des Fahrzeugs 3 verbunden. Beispielsweise sind die beiden Anbringpunkte 39 in Querrichtung zur Sitzrichtung S beabstandet voneinander vorhanden. Durch die Y-förmige Ausbildung des Rückhalteorgans 45 ist eine vergleichsweise besser Energieverteilung im Crashfall erzielbar.

Vorstellbar ist in der Gurtgestellausführung 44 gemäß den Figuren 3 und 4 auch, dass das Rückhalteorgan 45 mit dem zweiten und dem dritten Längenabschnitt 48, 49 jeweils an einem Übergangsbereich einer Fahrzeugsäule zu einem Fahrzeugdachholm angeordnet sind (nicht in den Figuren 3 und 4 dargestellt).

In den Figuren 5 und 6 ist ein weiteres Gurtgestell 50 gezeigt, welches sich vom Gurtgestell 1 gemäß der Figuren 1 und 2 darin unterscheidet, dass das Gurtgestell 50 zusätzlich ein Stützelement 51 aufweist. Das Stützelement 51 ist beispielsweise als ein Vierkantrohr vorhanden. Zum Beispiel ist das Stützelement 51 mit einem ersten Ende 52 an der Vertikalstütze 4 befestigt, z.B. angeschweißt. Denkbar ist, dass das Stützelement 51 sich in Sitzrichtung und quer zur Sitzrichtung in einer horizontalen in Richtung Fahrzeugseitenwand 24 erstreckt und mit einem zweiten Ende 53 an der Fahrzeugwand 24 und/oder einer Fahrzeugsäule (nicht gezeigt) befestigt ist. Hierdurch ist das Gurtgestell 50 in Fahrtrichtung abgestützt vorhanden.

Beispielsweise weist das Stützelement 51 eine Auflagefläche 54 auf, welche dazu ausgebildet ist ein Sitzelement der Fahrzeug-Sitzanordnung anliegend oder aufliegend auf dem Stützelement 51 anzuordnen (nicht gezeigt).

Beispielsweise ist das Stützelement 51 im angeordneten Zustand am zweiten Ende 53 über ein Anbindungselement 55 mit der Fahrzeugseitenwand 26 oder der Fahrzeugsäule verbunden.

Vorstellbar ist auch, dass das Gurtgestell 44 gemäß den Figuren 3 und 4 ein Stützelement gemäß der Ausführungsform des Gurtgestells 50 der Figuren 5 und 6 aufweist.

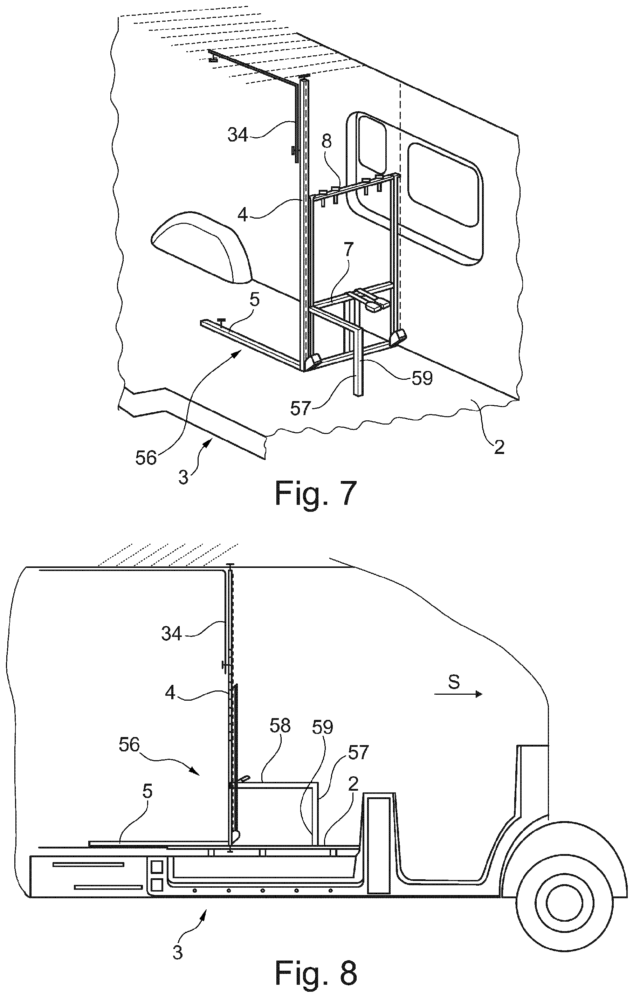

In den Figuren 7 und 8 ist ein weiteres Gurtgestell 56 gezeigt, welches sich vom Gurtgestell 1 gemäß der Figuren 1 und 2 darin unterscheidet, dass das Gurtgestell 56 zusätzlich einen Stützfuß 57 aufweist.

Zum Beispiel ist der Stützfuß 57 auf höhe der ersten Querstrebe 7 an der ersten Querstrebe 7 und/oder an der Vertikalstütze 4 befestigt, z.B. angeschweißt. Beispielsweise erstreckt sich der Stützfuß 57 ausgehend von der ersten Querstrebe 7 in Sitzrichtung S und nach unten in Richtung einer Aufstellfläche des Gurtgestells 56, z.B. dem Fahrzeugboden 2. Vorstellbar ist, dass der Stützfuß 57 ausgehend von der Vertikalstütze 4 sich zunächst in einer horizontalen Ebene und/oder in einer horizontalen Richtung erstreckt, z.B. mit einem ersten Stützfußabschnitt 58 und dann abgewinkelt vorhanden ist, sodass der Stützfuß 57 sich mit einem zweiten Stützfußabschnitt 59 in einer vertikalen Ebene und/oder in einer vertikalen Richtung in Richtung dem Fahrzeugboden 2 erstreckt.

Vorstellbar ist auch, dass das Gurtgestell 50 gemäß der Figuren 5 und 6 einen Stützfuß gemäß der Ausführungsform des Gurtgestells 56 der Figuren 7 und 8 aufweist.

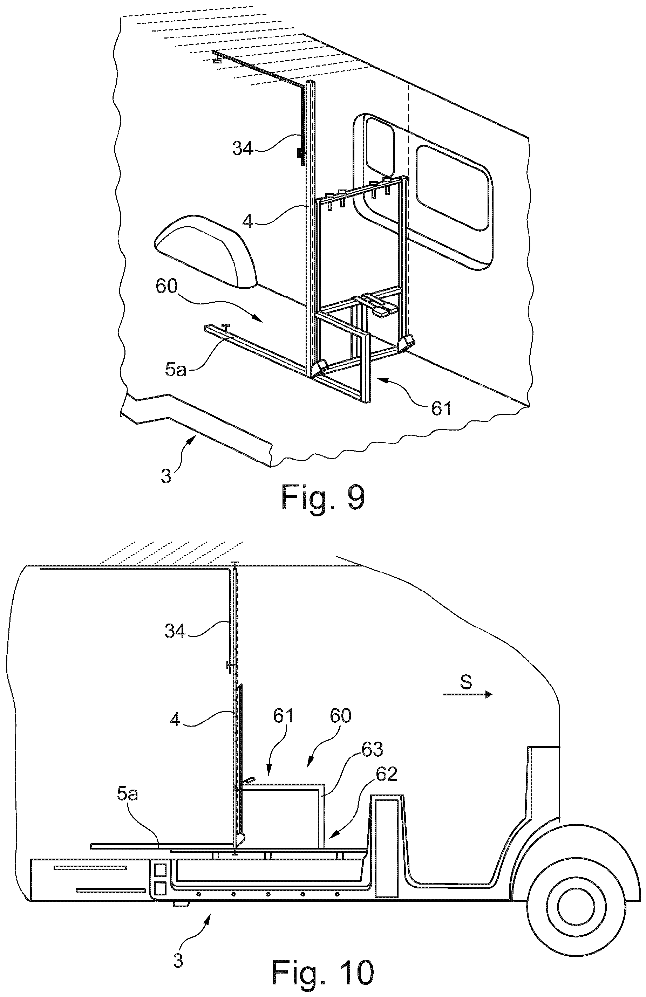

In den Figuren 9 und 10 ist ein weiteres Gurtgestell 60 gezeigt, welches sich vom Gurtgestell 56 gemäß der Figuren 7 und 8 darin unterscheidet, dass das Gurtgestell 60 eine weitere Ausbildungsform eines Stützfuß 61 zeigt.

Das Gurtgestell 60 weist eine Befestigungsleiste 5a auf, welche sich ausgehend von der Vertikalstütze 4 nicht nur entgegen der Sitzrichtung erstreckt, sondern auch in Sitzrichtung S. Beispielsweise erstreckt sich die Befestigungsleiste 5a bis zu einem unteren Ende 62 eines zweiten Stützfußabschnitts 63 und ist mit diesem verbunden. Hierdurch ist ein Kräfteparallelogramm vorteilhaft geschlossen, sodass Kräfte definiert abgeleitet werden können.

**Bezugszeichenliste**

| | |
|---|---|
| 1 Gurtgestell | 35 Querschlitzung |
| 2 Fahrzeugboden | 36 Ende |
| 3 Fahrzeug | 37 Montagepunkt |
| 4 Vertikalstütze | 38 Ende |
| 5 Befestigungsleiste | 39 Anbringpunkt |
| 6 Vertikalstütze | 40 Biegung |
| 7 Querstrebe | 41 Längenabschnitt |
| 8 Querstrebe | 42 Längenabschnitt |
| 9 Querholm | 43 Halteelement |
| 10 Gurtrückhaltesystems | 44 Gurtgestell |
| 11 Gurtaufroller | 45 Rückhalteorgan |
| 12 Gurtschließe | 46 Längenabschnitt |
| 13 Gurt | 47 Biegung |
| 14 Gurtumlenker | 48 Längenabschnitt |
| 15 Ende | 49 Längenabschnitt |
| 16 Ende | 50 Gurtgestell |
| 17 Fahrzeugdachholm | 51 Stützelement |
| 18 Vorderseite | 52 Ende |
| 19 Rückseite | 53 Ende |
| 20 Ende | 54 Auflagefläche |
| 21 Befestigungspunkt | 55 Anbindungselement |
| 22 Bolzen | 56 Gurtgestell |
| 23 Fahrzeugrahmen | 57 Stützfuß |
| 24 Fahrzeugseitenwand | 58 Stützfußabschnitt |
| 25 Fahrzeugsäule | 59 Stützfußabschnitt |
| 26 Fahrzeugdach | 60 Gurtgestell |
| 27 Ende | 61 Stützfuß |
| 28 Kopfstützenverbindungsmittel | 62 Ende |
| 29 Schraube | 63 Stützfußabschnitt |
| 30 Hohlraum | |
| 31 Energiespeicher | L Längsachse |
| 32 Innenraum | LB Längsachse |
| 33 | F Fahrtrichtung |
| 34 Rückhalteorgan | S Sitzrichtung |

## Patentansprüche

1. Gurtgestell (1, 44, 50, 56, 60) für einen Fahrzeugsitz zur Anordnung in einem Fahrzeug (3), wobei das Gurtgestell (1, 44, 50, 56, 60) eine Vertikalstütze (4) aufweist, wobei am Gurtgestell (1, 44, 50, 56, 60) eine Komponente eines Gurtrückhaltesystems (10) angeordnet ist, wobei ein Rückhalteorgan (34) mit einem ersten Ende (36) des Rückhalteorgans (34) an der Vertikalstütze (4) angeordnet ist, wobei das Rückhalteorgan (34) sich ausgehend von der Vertikalstütze (4) entgegen der Sitzrichtung weg von der Vertikalstütze (4) erstreckt, wobei das Rückhalteorgan (34) mit einem zweiten Ende (38) an einem Fahrzeugdach (26) und/oder einer Fahrzeugsäule des Fahrzeugs (3) anordenbar ausgebildet ist.

2. Gurtgestell (1, 44, 50, 56, 60) für einen Fahrzeugsitz zur Anordnung in einem Fahrzeug (3) nach dem vorangegangenen Anspruch 1, **dadurch gekennzeichnet, dass** das Gurtgestell (1, 44, 50, 56, 60) ein erstes und ein zweites Rückhalteorgan aufweist, wobei das erste und das zweite Rückhalteorgan an einem ersten Ende an einem Montagepunkt (37) der Vertikalstütze (4) mit der Vertikalstütze (4) verbunden sind, wobei das erste Rückhalteorgan (34) mit einem zweiten Ende an einem Fahrzeugdach (26) und/oder einer Fahrzeugsäule des Fahrzeugs (3) anordenbar ausgebildet ist, wobei das zweite Rückhalteorgan mit einem zweiten Ende an einem Fahrzeugdach (26) und/oder einer Fahrzeugsäule des Fahrzeugs anordenbar ausgebildet ist, wobei das erste und das zweite Rückhalteorgan derart am Gurtgestell (1, 44, 50, 56, 60) angeordnet sind, dass die zweiten Enden des ersten und des zweiten Rückhalteorgans beabstandet voneinander vorhanden sind.

3. Gurtgestell (1, 44, 50, 56, 60) für einen Fahrzeugsitz zur Anordnung in einem Fahrzeug (3) nach einem der vorangegangenen Ansprüche, **dadurch gekennzeichnet, dass** das Rückhalteorgan (34) als ein Gurtband ausgebildet ist.

4. Gurtgestell (1, 44, 50, 56, 60) für einen Fahrzeugsitz zur Anordnung in einem Fahrzeug (3) nach einem der vorangegangenen Ansprüche, **dadurch gekennzeichnet, dass** die Vertikalstütze (4) einen Montagepunkt (37) aufweist, wobei am Montagepunkt (37) das erste Ende (36) des Rückhalteorgans (34) mit der Vertikalstütze (4) verbunden ist, wobei der Montagepunkt (37) in einem Bereich zwischen einem unteren und einem oberen Ende der Vertikalstütze (4) ausgebildet ist, wobei das Rückhalteorgan (34) derart am Gurtgestell (1, 44, 50, 56, 60) angeordnet ist, dass sich das Rückhalteorgan (34) ausgehend vom Montagepunkt (37) entlang der Vertikalstütze (4) bis zum oberen Ende (16) der Vertikalstütze (4) erstreckt und dann entgegen der Sitzrichtung weg von der Vertikalstütze (4) bis zum zweiten Ende (38) des Rückhalteorgans (34).

5. Gurtgestell (1, 44, 50, 56, 60) für einen Fahrzeugsitz zur Anordnung in einem Fahrzeug (3) nach einem der vorangegangenen Ansprüche, **dadurch gekennzeichnet, dass** die Vertikalstütze (4) einen Montagepunkt (37) aufweist, wobei am Montagepunkt (37) das erste Ende des Rückhalteorgans mit der Vertikalstütze (4) verbunden ist, wobei das Gurtgestell (1, 44, 50, 56, 60) Kopfstützenverbindungsmittel (28) aufweist, um einen Kopfstütze am Gurtgestell (1, 44, 50, 56, 60) anzuordnen, wobei der Montagepunkt (37) oberhalb der Kopfstützenverbindungsmittel (28) an der Vertikalstütze (4) ausgebildet ist.

6. Gurtgestell (1, 44, 50, 56, 60) für einen Fahrzeugsitz zur Anordnung in einem Fahrzeug (3) nach einem der vorangegangenen Ansprüche, **dadurch gekennzeichnet, dass** die Vertikalstütze (4) eine Länge entlang ihrer Längsachse aufweist, sodass die Vertikalstütze (4) im angeordneten Zustand am Fahrzeug (3) aufrechtstehend mit einem unteren Ende am Fahrzeugboden (2) eines Fahrzeugs (3) befestigbar ist und mit einem oberen Ende am Fahrzeugdach (26) oder einer Fahrzeugdecke des Fahrzeugs (3), wobei das untere und das obere Ende der Vertikalstütze (4) entlang der Längsachse der Vertikalstütze (4) voneinander beabstandet sind.

7. Gurtgestell (1, 44, 50, 56, 60) für einen Fahrzeugsitz zur Anordnung in einem Fahrzeug (3) nach einem der vorangegangenen Ansprüche, **dadurch gekennzeichnet, dass** das Gurtgestell (1, 44, 50, 56, 60) eine zweite Vertikalstütze (6) aufweist, wobei die zweite Vertikalstütze (6) ein Anbindungselement zur Anbindung der zweiten Vertikalstütze (6) an einer Fahrzeugsäule (25) oder einer Fahrzeugseitenwand (24) aufweist.

8. Gurtgestell (1, 44, 50, 56, 60) für einen Fahrzeugsitz zur Anordnung in einem Fahrzeug (3) nach einem der vorangegangenen Ansprüche, **dadurch gekennzeichnet, dass** das Gurtgestell (1, 44, 50, 56, 60) eine Befestigungsleiste (5) aufweist, wobei die Befestigungsleiste (5) an einem unteren Ende der Vertikalstütze (4) mit der Vertikalstütze (4) verbunden ist, wobei an der Befestigungsleiste (5) ein Montageelement zur Befestigung des Gurtgestells (1, 44, 50, 56, 60) an einem Fahrzeugboden oder an einem Fahrzeugrahmen des Fahrzeugs (3) ausgebildet ist, wobei die Befestigungsleiste (5) ausgehend von der Vertikalstütze (4) sich entgegen der Sitzrichtung weg von der Vertikalstütze (4) erstreckt.

9. Gurtgestell (1, 44, 50, 56, 60) für einen Fahrzeugsitz zur Anordnung in einem Fahrzeug (3) nach einem der vorangegangenen Ansprüche, **dadurch gekennzeichnet, dass** das Gurtgestell (1, 44, 50, 56, 60) ein Stützelement (51) aufweist, wobei das Stützelement (51) mit einem ersten Ende an der Vertikalstütze (4) befestigt ist, wobei das Stützelement (51) in Sitzrichtung von der Vertikalstütze (4) abstehend ausgebildet ist, wobei das Stützelement (51) mit einem zweiten Ende am Fahrzeugboden (2), an einer Fahrzeugwand (24) und/oder an einer Fahrzeugsäule (25) befestigbar ist.

10. Fahrzeugsitz oder Fahrzeugsitzbank mit einem Gurtgestell (1, 44, 50, 56, 60) nach einem der vorangegangenen Ansprüche.

11. Fahrzeug (3) mit einerm Fahrzeugsitz oder einer Fahrzeugsitzbank nach dem vorangegangenen Anspruch 10 oder mit einem Gurtgestell (1, 44, 50, 56, 60) nach einem der vorangegangenen Ansprüche 1 bis 9.
